# EUROPÄISCHE PATENTSCHRIFT

(11) **EP 2 400 174 B1**
(45) Veröffentlichungstag und Bekanntmachung des Hinweises auf die Patenterteilung: **06.11.2013**
(21) Anmeldenummer: 11166198.9
(22) Anmeldetag: 16.05.2011
(51) Int. Cl.: F16C 19/52, F16C 35/077, F16C 41/00

(54) **Wälzlager mit Isolierhülse**
Rolling bearing with insulating sleeve
Palier à roulement doté d'un manchon isolant

(30) Priorität: 22.06.2010 DE 102010024582
(43) Veröffentlichungstag der Anmeldung: 28.12.2011
(73) Patentinhaber: Schaeffler Technologies AG & Co. KG, 91074 Herzogenaurach (DE)
(72) Erfinder: Smetana, Tomas, 91074 Herzogenaurach (DE)

(56) Entgegenhaltungen:
- EP-A2- 0 417 744
- DE-U1- 20 012 676
- FR-A- 1 086 999
- GB-A- 532 653

## Beschreibung

### Gebiet der Erfindung

Die Erfindung betrifft ein Wälzlager in einem Elektromotor mit einem Lagerinnenring und einem radial außerhalb von diesem angeordneten Lageraußenring, zwischen diesen abwälzenden Wälzkörpern und einer am Außenumfang des Lageraußenrings befestigten und den Außenring beidseitig mittels nach radial innen umgelegten Borden umgreifenden Hülse.

### Hintergrund der Erfindung

Wälzlager, wie Rillenkugellager mit einem Lagerinnenring, einem Lageraußenring und zwischen diesen abrollenden Wälzkörpern, wie Kugeln, Kugelrollen, Tonnen oder Nadeln, sind aus dem Stand der Technik hinreichend bekannt. Diese werden beispielsweise als Radiallager zur verdrehbaren und axial festen Lagerung von Wellen, beispielsweise Rotorwellen in einem gehäusefesten Bauteil eingesetzt.

Zur Reduktion von Körperschall oder Schwingungen zwischen dem das Wälzlager aufnehmenden Bauteil und dem Wälzlager werden in der DE 102 03 307 A1 einzelne Wellringe oder Wellhülsen vorgeschlagen, die zwischen dem Außenumfang des Lageraußenrings und dem das Wälzlager aufnehmenden Bauteil radial verspannt sind und damit eine akustische Isolierung bilden.

Darüber hinaus ist aus EP 0 417 744 A1 ein Wälzlager in einem Elektromotor bekannt, dass ein Wälzlager aufweist, auf dessen Außenring eine Hülse aufgenommen ist. Die Hülse umgreift den Außenring beidseitig mittels radial nach innen umgelegten Borden und bildet eine sowohl akustische als auch elektrische Isolation des Wälzlagers. Ein elektrisch isolierendes Wälzlager ist aus GB532,653 bekannt, dessen Außenring zwei durch eine Ringnut beabstandete Ringschultern aufweist. Auf den Ringschultern sitzt ein teilweise armierter Dämpfungsring, der auch in die Ringnut eingreift.

Ein Wälzlager mit einer akustischen Dämpfungseinrichtung ist auch aus der nicht vorveröffentlichten deutschen Patentanmeldung Nr. 10 2009 056 352.0 bekannt, bei dem die Dämpfungseinrichtung aus einer Hülse gebildet ist, die über den Außenumfang des Lageraußenrings gezogen und axial beidseitig mit dem Außenring verbördelt ist. Dabei liegt die Hülse an zwei durch eine im Außenumfang des Lageraußenteils axial voneinander durch eine Ringnut getrennten Ringschultern des Lageraußenrings auf und bildet mittels eines zwischen den Ringschultern angeordneten Ringbereichs eine radiale Vorspannung zu der gehäusefesten Aufnahme des Wälzlagers. Darüber hinaus weist eine der an zwei axial voneinander durch eine Ringnut getrennten Ringschultern an dem Außenumfang des Lageraußenrings aufgenommenen Hülsen einen auf axialer Höhe der Ringnut radial elastischen Ringbereich aufweist. Dieser Ringbereich kann eine leicht nach radial außen gerichtete Wölbung aufweisen, so dass die Hülse radial vorgespannt in einer entsprechend dimensionierten Lageröffnung des Gehäuses aufgenommen werden kann. Diese elastische Aufnahme der Hülse und damit des Wälzlagers am Gehäuse sorgt für einen schwingungsdämpfenden und damit Störgeräusche zumindest vermindernden Effekt. Der Weg der Wölbung wird dabei durch eine geringe axiale Verlagerung der radial nach innen erweiterten Borde der Hülse gegenüber dem Lageraußenring ausgeglichen.

Werden derartige Wälzlager in Elektromotoren eingesetzt, können sich an den Kontaktbereichen zwischen der Hülse und dem das Wälzlager aufnehmenden gehäusefesten Bauteil sowie zwischen den Kontaktstellen der Wälzkörper und den Laufbahnen der Lagerringe Korrosionsbereiche bilden, die die Eigenschaften des Wälzlagers, beispielsweise dessen Reibwiderstand negativ beeinflussen.

### Aufgabe der Erfindung

Ausgehend von den dargelegten Nachteilen des bekannten Standes der Technik liegt der Erfindung deshalb die Aufgabe zu Grunde, ein Wälzlager für Anwendungen in einem Elektromotor vorzuschlagen, das sowohl eine verbesserte Korrosionsbeständigkeit als auch eine akustische Dämpfung zwischen der sich drehenden Rotorwelle und dem diese aufnehmenden gehäusefesten Bauteil ermöglicht.

### Beschreibung der Erfindung

Erfindungsgemäß wird diese Aufgabe bei einem Wälzlager nach dem Oberbegriff des Anspruchs 1 gelöst.

Die Hülse bildet eine sowohl akustische als auch elektrische Isolation des Wälzlagers nach radial außen, indem erfindungsgemäß die Hülse aus Gründen der mechanischen Belastbarkeit aus Stahl hergestellt und mit einer nicht für elektrischen Strom durchlässigen Beschichtung versehen ist.

Durch die Verbindung der beiden Formen der Isolation in der Hülse können im Wesentlichen nach Standardverfahren hergestellte Wälzlager in besonders effektiver Weise ohne Änderung der üblichen Materialzusammensetzung geräuschärmer ausgestaltet und gegen elektrische Störströme, die durch das Wälzlager fließen, geschützt werden. Eine durch diese Ströme bedingte Korrosion an den Innenteilen des Wälzlagers - die Hülse eingeschlossen - kann mittels eines einzigen Bauteils unterbunden werden. Demzufolge können die aufeinander abwälzenden Bauteile bei üblicher Zusammensetzung vor Korrosion geschützt und dauerhaft ein unabhängig von deren Einsatz in einem Elektromotor mit einem geringen Reib- beziehungsweise Rollwiderstand betrieben werden.

Das Wälzlager wird dabei bevorzugt als Rillenkugellager eingesetzt, das ein Lager zur verdrehbaren und axial festen Aufnahme der Rotorwelle in dem Gehäuse des Elektromotors bildet.

Alternativ oder zusätzlich kann der Ringbereich zumindest einen Durchbruch, vorzugsweise mehrere über den Umfang verteilte und sich gegebenenfalls in axiale Richtung wiederholende Durchbrüche aufweisen, so dass die Steifigkeit des Ringbereichs in sich in radiale und/oder axiale Richtung den Anforderungen entsprechend durch Anzahl und Form der Durchbrüche eingestellt werden kann.

Die elektrische Isolierung der Rotorwelle gegenüber dem Gehäuse über das Wälzlager übernimmt ausschließlich die Hülse.

Die Beschichtung kann mittels üblicher Beschichtungsverfahren wie Tauchen, Spritzen wie Flammspritzen, Pulverbeschichten, Lackieren und dergleichen erfolgen. Dabei kann es beispielsweise aus Kostengründen oder Gründen der Maßhaltigkeit von Kontaktstellen zu dem Lageraußenring vorteilhaft sein, wenn die Hülse nur an den Kontaktflächen zu dem Gehäuse des Elektromotors partiell beschichtet und auf eine komplette Beschichtung verzichtet wird.

Abhängig von den gewünschten Anforderungen an die Anwendung des Wälzlagers kann die Beschichtung aus nichtleitenden anorganischen oder organischen Materialien oder einer Mischung dieser gebildet sein. Als vorteilhaft haben sich Kunststoffe wie Thermoplaste erwiesen, die in einfachen und gut kontrollierbaren Beschichtungsverfahren wie beispielsweise Pulverbeschichten dauerhaft auf die Hülse aufgebracht werden können.

Insbesondere in Verbindung mit einem balligen wie nach außen radial gewölbten Ringbereich hat es sich als vorteilhaft erwiesen, wenn die ballige Form des Ringbereichs auf die Lageröffnung des Gehäuses durch Schleifen angepasst ist, so dass das Wälzlager unter radialer Vorspannung an der Lageröffnung zentriert aufgenommen ist. Dabei hat sich als besonders vorteilhaft erwiesen, wenn die Beschichtung neben der elektrischen Isolation gegenüber der Lageröffnung eine ausreichend dicke Zentrierschicht ausbildet, so dass während der Montage des Wälzlagers eine Vorzentrierung über die Zentrierschicht erleichtert wird und durch plastische Verformung der Zentrierschicht vorhandene Unebenheiten ausgeglichen werden. Hierzu wird die Beschichtung aus einem plastisch verformbaren Material, das unter Spannung und Scherung nicht zum Reißen neigt, verwendet, beispielsweise gegebenenfalls verstärkte Fluorkohlenwasserstoffe wie PTFE, Polyethylen, Polypropylen, Polyamid und dergleichen sowie deren Mischungen und Coploymere.

Es versteht sich, dass bei einer axialen Fixierung des Lageraußenrings in der Lageröffnung des Gehäuses auch die axialen Kontaktflächen des Wälzlagers gegenüber der Lageröffnung einerseits und -soweit erforderlich - der axialen Sicherung auf der dem axialen Anschlag an der Lageröffnung gegenüberliegenden Seite elektrisch isoliert sind. Hierzu können die Stirnseite(n) des Lageraußenrings selbst mit einer der beschriebenen Beschichtungen versehen sein. Als besonders vorteilhaft hat sich jedoch erwiesen, wenn der Lageraußenring axial über die beschichtete Hülse festgelegt ist, so dass lediglich die Hülse als beschichtetes Bauteil auszuführen ist. Dementsprechend sind zumindest die Außenseiten der nach radial innen gerichteten Borde beschichtet.

Es hat sich hierzu als weitere Möglichkeit der akustischen Isolation als vorteilhaft erwiesen, wenn zumindest einer der umgelegten Borde axial elastisch gegenüber dem Lageraußenring vorgespannt ist. Hierbei wird das Wälzlager axial an dem gewellten Bord abgestützt, so dass das Zusammenspiel der radial und axial vorgespannten Hülse eine quasi in diese Richtungen vorgespannte schwimmende Lagerung ergibt, die eine besonders gute akustische Isolierung bei gegebener elektrischer Isolierung ermöglicht

Das vorgeschlagene Lager wird in besonders vorteilhafter Weise in Elektromotoren beispielsweise in Form einer Synchron- oder Asynchronmaschine in einem Kraftfahrzeug mit Hybrid- oder Elektroantrieb eingesetzt. Hierbei sind die Anforderungen an die durch das vorgeschlagene Wälzlager bereitgestellte schnell laufende Rotorlagerung bei möglichst geringer Reibung bei gleichzeitig noch ausreichender dynamischer Tragfähigkeit und Abdichtung des Elektromotors gegen Umgebungsmedien besonders hoch. Durch die Isolierung eines Stromdurchgangs durch das Wälzlager bei gleichzeitiger akustischer Isolierung zwischen dem Rotor und dem Getriebegehäuse mittels der vorgeschlagenen Hülse wird dies in einfacher und kostengünstiger Weise für und in einem derartigen Elektromotor erzielt,

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: einen Schnitt durch einen Elektromotor mit erfindungsgemäß ausgebildeten Wälzlagern;
- Figur 2: einen Teilschnitt durch ein erfindungsgemäß ausgebildetes Wälzlager;
- Figur 3: das Wälzlager der Figur 2 in Explosionsdarstellung.

### Ausführliche Beschreibung der Zeichnungen

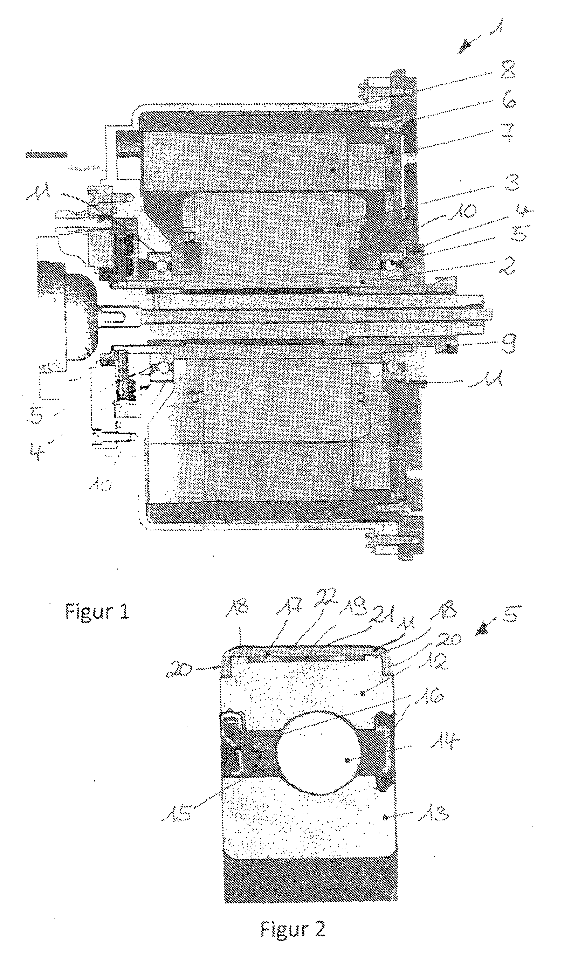

Figur 1 zeigt den Elektromotor 1 im Schnitt. Der Elektromotor 1 mit dem Stator 7 und dem Rotor 3 kann beispielsweise Bestandteil eines Hauptantriebs einer elektrisch gesteuerten Achse eines Kraftfahrzeugs sein. Die Achse ist dabei zum Fahrwerk des Kraftfahrzeugs hin über ein dem Elektromotor vorgeschaltetes Getriebe verbunden. Der Elektromotor 1 ist dabei über die Lagerplatte 6 fliegend eingespannt. Somit werden Schwingungen von der Rotorwelle 2 des Rotors 3 über das nicht dargestellte Getriebe in das Fahrwerk übertragen.

Auf die Rotorlagerung 4 mittels der Wälzlager 5 wirken dabei nicht nur die Unwuchtkräfte des Rotors 3 sondern Axialkräfte des Getriebes, beispielsweise eines Planetengetriebes, von dem lediglich die von der Rotorwelle 2 angetriebene Schrägverzahnung 9 des Sonnenrads dargestellt ist, und dynamische Längs-, Vertikal- Querkräfte. Die Rotorlagerung 4 erfolgt daher in der Lagerplatte 6 des Gehäuses 8 beziehungsweise im Gehäuse 8 des Elektromotors 1, indem die Wälzlager 5 in entsprechenden Lageröffnungen 10 zur Bildung einer akustischen und elektrischen Isolierung mittels der radial elastischen und beschichteten Hülse 11 aufgenommen sind.

Figur 2 zeigt das als Rillenkugellager ausgebildete Wälzlager 5 der Figur 1 im Teilschnitt mit dem Lageraußenring 12 und dem Lagerinnenring 13 sowie den zwischen diesen abwälzenden, in dem Wälzkörperkäfig 15 über den Umfang positionierten Wälzkörpern 14. Der Lagerinnenraum ist mittels der Dichtungen 16 nach außen abgedichtet. Der Außenumfang 17 des Lageraußenrings 12 ist profiliert ausgebildet und weist zwei durch die Ringnut 19 axial beabstandete Ringschultern 18 auf, auf die die Hülse 11 aufgepresst ist. Die Hülse 11 ist an beiden Seiten mit den nach innen gebördelten Borden 20 versehen. Zwischen den Ringschulter 18 weist die Hülse 11 den Ringbereich 21 auf, der radial nach außen ballig geschliffen ist. Durch entsprechend nicht dargestellte Durchbrüche wird bevorzugt eine radiale Steifigkeit zwischen 100000 und 200000 N/mm eingestellt, so dass das Wälzlager unter radialer Vorspannung in die Lageröffnung 10 (Figur 1) eingepresst wird und eine akustische Entkoppelungseinrichtung bildet.

Die elektrische Isolation des Wälzlagers 5 gegenüber dem Gehäuse 8 (Figur 1) erfolgt mittels der Beschichtung 22 auf der Hülse 11, die aus nicht leitendem Material bevorzugt Kunststoff gebildet ist. Die Dicke der Beschichtung wird so eingestellt, dass diese gleichzeitig als Zwischenschicht dienende Beschichtung 22 eine zusätzliche Zentrierung gegenüber der Lageröffnung 10 bereitstellt und Form- und Lagertoleranzen beispielsweise in Form von Verkippungen ausgleichen kann.

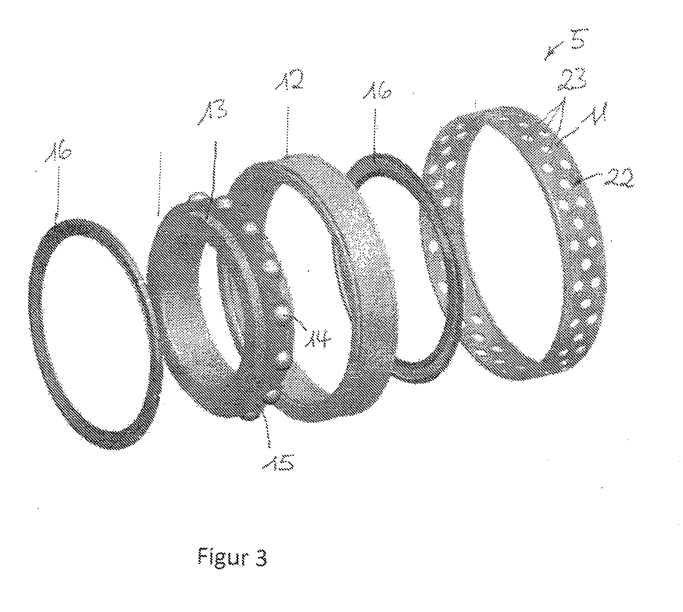

Figur 3 zeigt das Wälzlager 5 der Figuren 1 und 2 in Form einer Explosionsdarstellung mit dem Lageraußenring 12, dem Lagerinnenring 13 mit aufgezogenem, die Wälzkörper 14 enthaltenden Wälzkörperkäfig 15 sowie die Dichtungen 16 und die die Beschichtung 22 und Durchbrüche 23 aufweisende Hülse 11,

### Bezugszeichenliste

- 1: Elektromotor
- 2: Rotorwelle
- 3: Rotor
- 4: Rotorlagerung
- 5: Wälzlager
- 6: Lagerplatte
- 7: Stator
- 8: Gehäuse
- 9: Schrägverzahnung
- 10: Lageröffnung
- 11: Hülse
- 12: Lageraußenring
- 13: Lagerinnenring
- 14: Wälzkörper
- 15: Wälzkörperkäfig
- 16: Dichtung
- 17: Außenumfang
- 18: Ringschulter
- 19: Ringnut
- 20: Bord
- 21: Ringbereich
- 22: Beschichtung
- 23: Durchbruch

## Patentansprüche

1. Wälzlager (5) eines Elektromotors (1) mit einem Lagerinnenring (13) und einem radial außerhalb von diesem angeordneten Lageraußenring (12), sowie Wälzkörpern (14) zwischen dem Lagerinnenring (13) und dem Lageraußenring (12) und einer am Außenumfang (17) des Lageraußenrings (12) befestigten und den Lageraußenring (12) beidseitig mittels radial nach innen umgelegten Borden (20) umgreifenden Hülse (11), wobei die Hülse (11) eine sowohl akustische als auch elektrische Isolation des Wälzlagers (5) nach radial außen bildet und wobei der Lageraußenring (12) am Außenumfang (17) profiliert ausgebildet ist und dabei zwei durch eine Ringnut (19) axial voneinander getrennte Ringschultern (18) aufweist, wobei die Hülse (11) an den Ringschultern (18) aufgenommen ist und einen auf axialer Höhe der Ringnut (19) radial elastischen Ringbereich (21) aufweist, **dadurch gekennzeichnet, dass** die Hülse (11) aus Stahl gebildet und mit einer nicht für elektrischen Strom durchlässigen Beschichtung (22) zumindest radial außen versehen ist, wobei die Hülse (11) auf die Ringschultern (18) aufgepresst ist.

2. Wälzlager (5) nach Anspruch 1, **dadurch gekennzeichnet, dass** der Ringbereich (21) zumindest einen Durchbruch (23) aufweist.

3. Wälzlager (5) nach Anspruch 1, **dadurch gekennzeichnet, dass** die Beschichtung (22) aus Kunststoff gebildet ist.

4. Wälzlager (5) nach einem der Ansprüche 3, **dadurch gekennzeichnet, dass** der Ringbereich (21) nach radial außen ballig ausgebildet ist.

5. Wälzlager (5) nach Anspruch 4, **dadurch gekennzeichnet, dass** die ballige Form des Ringbereichs (21) geschliffen ist.

6. Wälzlager (5) nach Anspruch 4, **dadurch gekennzeichnet, dass** die Beschichtung (22) am Ringbereich (21) als plastisch verformbare Zentrierschicht ausgebildet ist.

7. Wälzlager (5) nach Anspruch 1, **dadurch gekennzeichnet, dass** zumindest einer der umgelegten Borde (20) axial elastisch gegenüber dem Lageraußenring (12) vorgespannt ist.

8. Wälzlager (5) nach Anspruch 7, **dadurch gekennzeichnet, dass** das Wälzlager (5) axial an einem gewellten der Borde (20) abgestützt ist.

9. Elektromotor (1) mit wenigstens einem Wälzlager (5) nach Anspruch 1, **dadurch gekennzeichnet, dass** das Wäzlager (5) mit der Hülse (11) in Lageröffnungen (10) aufgenommen ist und wobei mittels des Wälzlagers (5) eine Rotorwelle (2) eines Rotors (3) gelagert ist.

## Claims

1. Rolling bearing (5) of an electric motor (1), having a bearing inner ring (13) and having a bearing outer ring (12) arranged radially outside said bearing inner ring and also having rolling bodies (14) between the bearing inner ring (13) and the bearing outer ring (12) and having a sleeve (11) which is fastened to the outer circumference (17) of the bearing outer ring (12) and which engages around the bearing outer ring (12) at both sides by means of radially inwardly bent-over flanges (20), wherein the sleeve (11) forms a both acoustic and also electrical insulation of the rolling bearing (5) in the radially outward direction, and wherein the bearing outer ring (12) is of profiled form on the outer circumference (17) and, here, has two ring shoulders (18) separated axially from one another by an annular groove (19), wherein the sleeve (11) is held on the ring shoulders (18) and has a radially elastic ring region (21) at the axial level of the annular groove (19), **characterized in that** the sleeve (11) is formed from steel and is provided at least radially on the outside with a coating (22) which is not permeable to electrical current, wherein the sleeve (11) is pressed onto the ring shoulders (18).

2. Rolling bearing (5) according to Claim 1, **characterized in that** the ring region (21) has at least one aperture (23).

3. Rolling bearing (5) according to Claim 1, **characterized in that** the coating (22) is formed from plastic.

4. Rolling bearing (5) according to Claim 3, **characterized in that** the ring region (21) is of crowned form in the radially outward direction.

5. Rolling bearing (5) according to Claim 4, **characterized in that** the crowned form of the ring region (21) is ground.

6. Rolling bearing (5) according to Claim 4, **characterized in that** the coating (22) on the ring region (21) is formed as a plastically deformable centring layer.

7. Rolling bearing (5) according to Claim 1, **characterized in that** at least one of the bent-over flanges (20) is axially elastically preloaded relative to the bearing outer ring (12).

8. Rolling bearing (5) according to Claim 7, **characterized in that** the rolling bearing (5) is supported axially on an undulating one of the flanges (20).

9. Electric motor (1) having at least one rolling bearing (5) according to Claim 1, **characterized in that** the rolling bearing (5) is held by way of the sleeve (11) in bearing openings (10), and wherein a rotor shaft (2) of a rotor (3) is mounted by means of the rolling bearing (5).

## Revendications

1. Palier à roulement (5) pour un moteur électrique (1) comprenant une bague interne de palier (13) et une bague externe de palier (12) disposée radialement à l'extérieur de celle-ci, ainsi que des corps de roulement (14) entre la bague interne de palier (13) et la bague externe de palier (12) et une douille (11) fixée sur la périphérie externe (17) de la bague externe de palier (12) et venant en prise autour de la bague externe de palier (12) des deux côtés au moyen de bords (20) repliés radialement vers l'intérieur, la douille (11) formant, radialement vers l'extérieur, une isolation acoustique et électrique du palier à roulement (5), et la bague externe de palier (12) étant réalisée sous forme profilée au niveau de la périphérie externe (17) et présentant en l'occurrence deux épaulements annulaires (18) séparés axialement l'un de l'autre par une rainure annulaire (19), la douille (11) étant reçue au niveau des épaulements annulaires (18) et présentant une région annulaire radialement élastique (21) à à hauteur axiale de à rainure annulaire (19), **caractérisé en ce que** la douille (11) est formée en acier et est pourvue au moins radialement à l'extérieur d'un revêtement (22) insolant vis-à-vis du courant électrique, la douille (11) étant pressée sur les épaulements annulaires (18).

2. Palier à roulement (5) selon la revendication 1, **caractérisé en ce que** la région annulaire (21) présente au moins un orifice (23).

3. Palier à roulement (5) selon la revendication 1, **caractérisé en ce que** le revêtement (22) est constitué de plastique.

4. Palier à roulement (5) selon la revendication 3, **caractérisé en ce que** la région annulaire (21) est réalisée sous forme bombée radialement vers l'extérieur.

5. Palier à roulement (5) selon la revendication 4, **caractérisé en ce que** la forme bombée de la région annulaire (21) est fendue.

6. Palier à roulement (5) selon la revendication 4, **caractérisé en ce que** le revêtement (22) sur la région annulaire (21) est réalisé sous forme d'une couche de centrage déformable plastiquement.

7. Palier à roulement (5) selon la revendication 1, **caractérisé en ce qu'**au moins l'un des bords repliés (20) est précontraint élastiquement axialement par rapport à la bague externe de palier (12).

8. Palier à roulement (5) selon la revendication 7, **caractérisé en ce que** le palier à roulement (5) est supporté axialement contre un bord ondulé des bords (20).

9. Moteur électrique (1) comprenant au moins un palier à roulement (5) selon la revendication 1, **caractérisé en ce que** le palier à roulement (5) est reçu avec la douille (11) dans des ouvertures de palier (10) et un arbre de rotor (2) d'un rotor (3) est supporté au moyen du palier à roulement (5) .
